(19) Europäisches Patentamt
European Patent Office
Office européen des brevets

(11) **EP 2 810 043 B1**

(12) **EUROPEAN PATENT SPECIFICATION**

(45) Date of publication and mention of the grant of the patent:
**19.10.2022 Bulletin 2022/42**

(21) Application number: **13712354.3**

(22) Date of filing: **01.02.2013**

(51) International Patent Classification (IPC):
**G01N 11/16** (2006.01)     **G01N 9/00** (2006.01)
**G01N 29/02** (2006.01)

(52) Cooperative Patent Classification (CPC):
**G01N 29/022; G01N 9/002; G01N 11/16; G01N 29/036;** G01N 2009/004; G01N 2291/02818; G01N 2291/0427

(86) International application number:
**PCT/IB2013/050869**

(87) International publication number:
**WO 2013/118038 (15.08.2013 Gazette 2013/33)**

(54) **SENSOR AND METHOD FOR MEASURING PROPERTIES OF A LIQUID BY MEANS OF A SENSING ELEMENT**

SENSOR UND VERFAHREN ZUR MESSUNG DER EIGENSCHAFTEN EINER FLÜSSIGKEIT MITTELS EINES SENSORELEMENTES

CAPTEUR ET PROCÉDÉ POUR LA MESURE DES PROPRIÉTÉS D'UN LIQUIDE AU MOYEN D'UN ÉLÉMENT DE DÉTECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2012 IT TO20120091**

(43) Date of publication of application:
**10.12.2014 Bulletin 2014/50**

(73) Proprietor: **ELTEK S.p.A.**
**15033 Casale Monferrato (Alessandria) (IT)**

(72) Inventors:
• **PIZZI, Marco**
**I-10153 Torino (IT)**
• **MERLANO, Piercarlo**
**I-15121 Alessandria (IT)**
• **RONDANO, Matteo**
**I-15030 Camagna (AL) (IT)**
• **MORTARA, Enrica**
**I-11020 Montjovet (AO) (IT)**

(74) Representative: **Ferroni, Filippo et al**
**Metroconsult Genova S.r.l.**
**Via Palestro, 5/2**
**16122 Genova (IT)**

(56) References cited:
**EP-A1- 0 222 503          EP-A1- 1 698 880
EP-A2- 0 282 251          DE-A1-102008 054 945
US-A1- 2006 031 030       US-A1- 2009 120 169**

**Description**

The present invention relates to a sensor, in particular of the bender type, and to a method for measuring properties of a liquid, in particular a fuel, preferably for vehicles. The term "bender" generally refers to a device consisting of one or more piezoelectric elements associated with a non-piezoelectric flexible support, which may be electrically conductive or insulating depending on the element's specific configuration, which acts as a constraint to the piezoelectric element, thereby transforming a deformation into a perpendicular displacement of the device. The bender described herein is generally defined as "unimorph", in that a piezoelectric element is associated with a non-piezoelectric passive element, also referred to as flexible support.

As an alternative, it is possible to use two associated piezoelectric elements directly welded to each other or welded to a central passive element, and powered in such a way that the elongation of one element corresponds to the contraction of the other element. A bender in this latter configuration is generally referred to as "bimorph".

Both unimorph and bimorph devices operate while being constrained at one end in "fixed bar" or "cantilever" mode. The concept can be extended to a lamina constrained at both ends or to more complex shapes, e.g. a cross constrained at its four ends or, in limit cases, a shape having infinite sides of infinitesimal length, or a membrane, e.g. a circular one, constrained at its perimeter.

The advantage offered by "bender" actuators, whether unimorph or bimorph, is that the displacement obtainable with piezoelectric actuators can be amplified by even more than one order of magnitude: for example, an intrinsic deformation by a few micrometres of the piezoelectric element can be amplified up to millimetric scales. This feature is important for the operation of the sensor proposed in this patent application, because greater displacement means higher measurement sensitivity.

Benders can be manufactured by using less costly techniques than bulk elements, as will be explained below, and can be powered with a lower voltage, which is a crucial feature for automotive applications.

As is known, the continual measurement of the properties of a liquid plays a fundamental role, in that it makes it possible to optimize the process in which the liquid will be involved. One example is the combustion process taking place inside an internal combustion engine; to increase combustion efficiency, the features of a fuel must be known before combustion occurs.

The density and viscosity of the fuel are two important parameters for adjusting a combustion engine and the like. Indeed, density allows to understand if water (which has a different density) has been added to the fuel, while viscosity allows to verify if the fuel can be optimally atomized or nebulized by the injection system.

The viscosity measurement becomes even more important when diesel fuel obtained from plants is used, which is richer in paraffins than mineral one; knowing the viscosity value, one can intervene by heating the fuel, if too viscous, before it is atomized or nebulized within the engine cylinders, without clogging the fuel ducts and/or injectors.

One solution for measuring density and/or viscosity has been described by Shih et al. in document *"Simultaneous liquid viscosity and density determination with piezoelectric unimorph cantilevers",* published in Journal of Applied Physics, vol. 89(2). This document describes a bender like the one employed by the invention claimed in the present patent application.

One limit of the sensor described in this prior-art document is its poor sensitivity, which does not allow to detect in a satisfactory manner, for some applications, density and/or viscosity variations occurring in a liquid fuel, because of the limited range of variation (just a few Hz or a few tens of Hz) of the frequency at which the bender vibrates.

Moreover, measurement sensitivity is made even worse by the presence of vibrations originating from the engine in operation, which may cause the bender to vibrate, thereby further increasing the noise entering the measurement circuit.

Patent application US2009120169 shows a fluid sensor for monitoring condition of engine oil in vehicle, comprising application specific integrated circuit (ASIC) chip that transmits variable frequency signal to tuning fork resonator so as to monitor impedances of resonator.

Patent application DE102008054945 discloses an apparatus for determining and/or monitoring density and/or viscosity of a medium. The apparatus includes: at least one mechanically oscillatable unit, which comes in contact at least partially with the medium; at least one transducer unit, which excites the mechanically oscillatable unit to execute mechanical oscillations and which receives mechanical oscillations from the mechanically oscillatable unit; and at least one housing. At least one limiting element is provided. The limiting element is embodied and arranged in such a manner that the limiting element at least partially surrounds the mechanically oscillatable unit and the therefrom resulting reduction of volume surrounding the mechanically oscillatable unit increases the measuring sensitivity of the apparatus.

The present invention aims at solving these and other problems by providing a new sensor and/or a new measurement method, wherein a bender-type element is used.

The idea underlying the present invention is to use a bender-type element for detecting the properties of a liquid, according to the appended claims.

An application of the bender-type sensor according to the present invention is for detecting the properties of a fuel and/or an oil or a lubricant and/or an additive, such as a combustion and/or exhaust additive.

The idea underlying the present invention is to use an auxiliary element, also called reference element. juxtaposed or positioned at a close distance from the bender, according to the appended claims.

In this way it is possible to enhance measurement sensitivity by increasing the resonance frequency variation occurring as density/viscosity change, thanks to the use of the reference element, which causes an increase in the degree of damping of the sensor. The motion equation of a bender immersed in a liquid and made to oscillate by an externally applied force $F_0\exp(-i\omega t)$ is the following:

$$(Me + MI)\frac{d^2y}{dt^2} + (b_{in} + b)\frac{dy}{dt} + Ky = F_0\exp(-i\omega t)$$

where $Me$ and $K$, are, respectively, the actual mass and the actual elastic constant of the bender, and $MI$ and b are, respectively, the induced mass and the damping due to the fluid. It can be noticed that $MI$ and $b$ depend, respectively, on fluid density and fluid viscosity. Therefore, both a higher density and a higher viscosity will lead to a change in the resonance frequency of the bender.

The presence of the reference element near the bender increases dissipation due to the viscous slip of the fluid, and hence to an increase in the contribution of the induced damping parameter $b_{in}$, thereby increasing the range of variation of the bender's resonance frequency.

Therefore, different procedures are feasible for simultaneously estimating the density and the viscosity of a fluid without having to use complex models which are not sufficiently reliable in operating conditions.

A first procedure provides for using a single bender facing the reference element and operating at two different supply voltages, corresponding to different oscillation amplitudes. A lower peak voltage corresponds to less interaction with the rigid reference element, and hence to a displacement of the resonance frequency which is affected by weights that will be designated $Pm*MI$ and $Pv*b$.

A higher peak voltage corresponds to more interaction with the reference element, and hence to a displacement of the resonance frequency which is affected by weights that will be designated $Pml*MI$ and $Pvl*b$. The relative ratios $Pm/Pv$ and $Pml/Pvl$ will be different and will allow, through appropriate calibration, to estimate both the density and the viscosity. This approach can be expanded to estimate other significant parameters, such as, for example, fluid pressure, by exploiting a third operating condition that allows to solve the system in three unknowns represented by density, viscosity and pressure.

A second procedure provides for using two equal benders with different reference elements.

A third procedure provides for using two benders with different interactions with the fluid, e.g. having surfaces interacting in different ways with the fluid.

These measurements may then be associated with temperature measurements taken by whatever means.

Another associable measurement is the measurement of the conductivity and dielectric constant of the fluid, in order to obtain a multi-parameter map capable of providing more accurate information about the liquid fuel in use.

Further advantageous features of the present invention will be set out in the appended claims.

These features as well as further advantages of the present invention will become more apparent from the following description referring to embodiments shown in the annexed drawings, which are supplied by way of non-limiting example, wherein:

Fig. 1 is a perspective view of a fuel duct coupled to a sensor according to the invention;
Fig. 2 is a perspective view of the sensor which is not part of the present invention, , separated from the fuel duct;
Fig. 3 is an exploded view of the sensor of Fig. 2;
Fig. 4 is a perspective view of a cross-section of a sensor which is not part of the present invention and of a part of the fuel duct of Fig. 1;
Fig. 5 is a perspective view of a sensing element comprised in the sensor of Fig. 4;
Fig. 5a is an enlarged view of a detail of the sensing element of Fig. 5;
Fig. 5b is a sectional view of a generic sensing element according to the invention;
Fig. 6 is a perspective view from another angle of the sensing element of Fig. 5, with a part thereof removed;
Figs. 7, 8 and 9 show a sensing element according to the present invention
Figs. 10, 11 and 12 show a variant of the sensing element of Figs. 5-6;
Figs. 13 and 14 show a sensor according to the present invention, comprising a circular sensing element;
Figs. 15 and 16 are perspective views of a cross-section of the sensor of Fig. 13, coupled to the fuel duct of Fig. 1;
Fig. 17 is a perspective view of the sensing element of Figs. 13 and 14;
Fig. 18 is an exploded view of the sensing element of Fig. 17;

Fig. 19 is a perspective view of a variant of the sensing element of Fig. 17;

Figs. 20 and 21 are respective explanatory diagrams that show corresponding examples of application of the sensor according to the invention;

Fig. 22 is a sectional view showing the application of a sensor according to the invention to a fluid filter;

Fig. 23 shows a variant of application of a sensor according to the invention to a fluid duct;

Figs. 24(a)-24(d) schematically show some forms of constraint of an element of the sensor according to the invention.

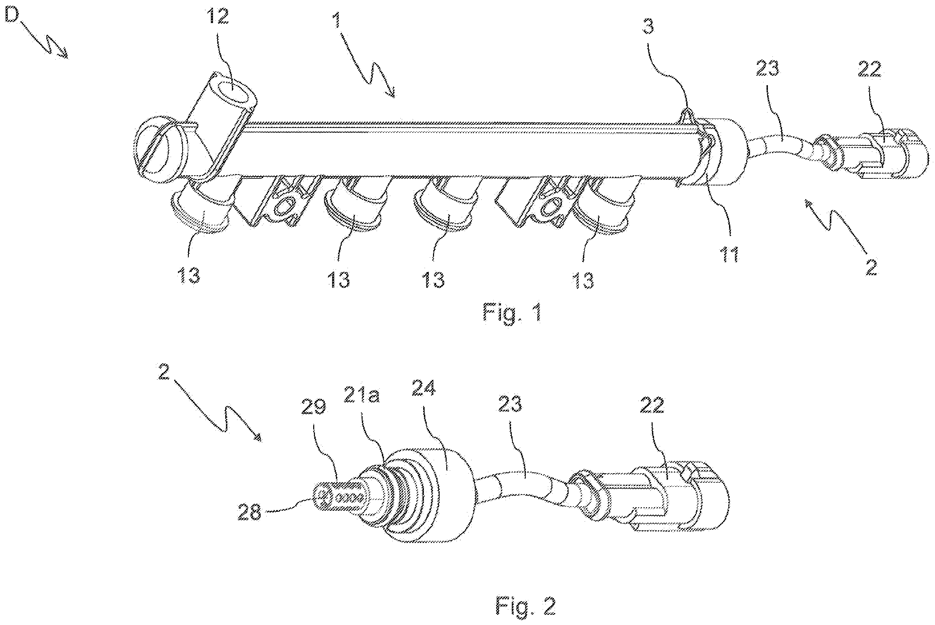

With reference to Fig. 1, there is shown a fluid supply device D for an internal combustion engine, comprising a duct 1 for a liquid or fuel, also commonly called "fuel rail" or "common rail".

In the duct 1 there is a housing seat 11 compatible with a sensor 2 according to the invention, an inlet 12 through which a liquid or fuel is made to flow, and one or more outlets 13, preferably four, to which injectors are connected for feeding fuel to cylinders of an internal combustion engine (not shown in the drawings because they are unimportant for the purpose of explaining the invention).

The housing seat 11 is preferably located on one side of the fuel duct 1, and is so shaped as to match the sensor 2; this connection is made stable by suitable fastening means, such as a clip 3 that locks the sensor 2 into an operating condition; in particular, said clip 3 is adapted to position itself between a perimetric seat of the duct 1 and a perimetric seat of the sensor 2.

The examples shown in figures 2-5a, 6 do not fall under the scope of the appended claims, nevertheless they are useful to understand the structure and the working of the sensor according to the present invention.

As shown in Fig. 2, a sealing element 21a, preferably an O-ring, is used in order to ensure a proper seal of the coupling between the duct 1 and the sensor 2.

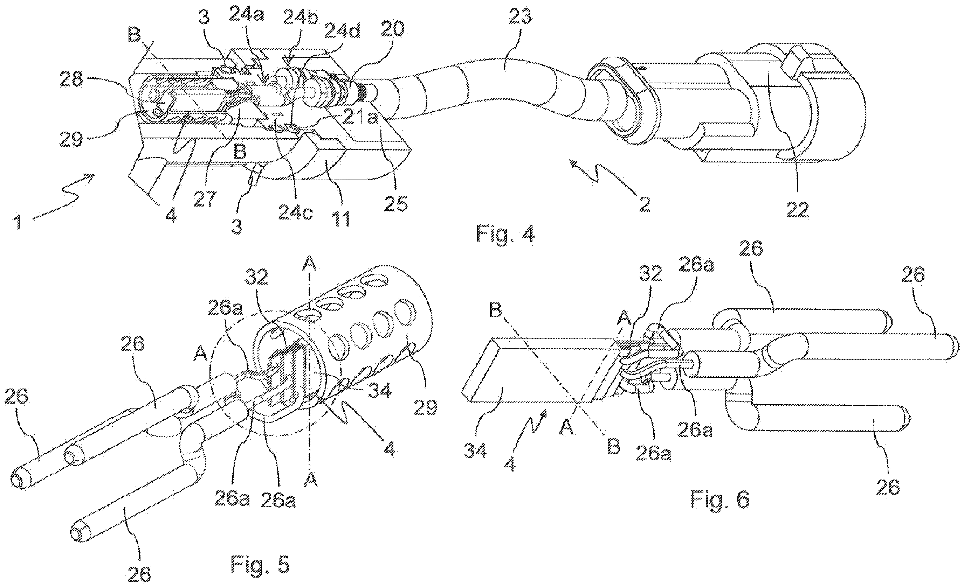

With reference also to the exploded view of Fig. 3, the sensor 2 comprises a connector 22, a cable 23, preferably a tripolar one, a base or housing 24, at least partly compatible with the housing seat 11 of the duct 1, a sealing or protective element 25 for the electric connection zone between the cable 23 and the sensor 2, electric contact or connection elements 26, a bender support 27 with at least one slot 27a, a sensing element 4, also referred to simply as "bender", shaped like a parallelepiped and partially inserted in the slot 27a, a reference element 28, and a protective element 29, which preferably protects said sensing element 4 against any disturbances caused by the flowing liquid and/or by particles dispersed in said liquid, when the sensing element 4 is in an operating condition.

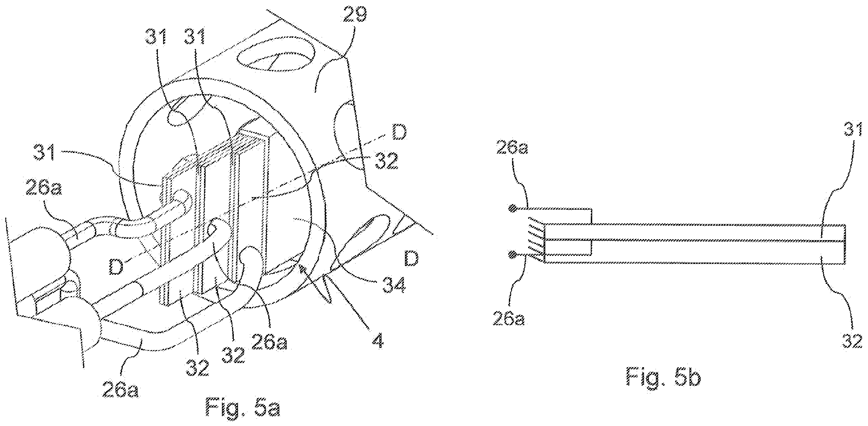

As shown also in Fig. 5b, the sensing element 4 consists of at least one non-piezoelectric passive element 31 and at least one piezoelectric active element 32 of the bender type, which are made integral with each other by suitable means.

The active element 32 has a generically laminar shape which, in the case of Fig. 1-6, is flat and rectangular.

In the example shown in Figures 5, 6 and 5a, the sensing element 4 is advantageously constituted by three active elements 32 and three passive elements associated together. The active elements 32 preferably overlap alternately with said passive elements 31, so as to advantageously increase the force exerted by the sensing element 4 and obtain a more accurate measurement.

The sensing element 4 can be used for measuring liquids containing chemically aggressive substances (e.g. strong acids, bases or the like). Aiming at advantageously increasing the resistance of the sensing element 4 to such substances, said sensing element 4 may at least partially be provided with a housing or coating 34, so that both the active elements 3 1 and the passive elements 32 will not come into direct contact with the liquid to be measured. To this end, said coating 34 must ensure the necessary degree of flexibility, so that the measurements taken by the sensing element 4 will neither be altered nor affected by errors.

The reference element 28 also acts as a check element, e.g. by increasing the dissipation due to the laminar flow of the liquid, so as to ensure the correctness of a measurement process that will be described hereafter.

The contact elements 26 are supported by the base 24, being inserted in or moulded over it.

The base 24 may also comprise a built-in electric connector (not shown in the drawings), thus making the presence of the cable 23 and of the connector 22 unnecessary. For this purpose, the ends 26a of the contact elements 26 facing outwards from the duct 1 may be used for creating the electric terminals of said built-in electric connector, such as an electric connector 22 integral or made as one piece with the housing 24.

Those parts of the sensor 2 which are wetted by the liquid to be measured comprise the sensing element 4 and the elements 28,29; such elements 28,29 have different shapes: The element 28 is L-shaped, with the major side longer than the sensing element 4 and the minor side preferably longer than the thickness of said sensing element 4; the element 29 has a hollow cylindrical shape, with the side surface provided with holes allowing the fuel to circulate around the sensing element 4.

As aforementioned, the reference element 28 acts as a check or reference element when the sensing element 4 is in operation, thus allowing the execution and/or improvement of the measurement process. In fact, the movement of the sensing element 4 induces motion in a flow between the surface of said sensing element 4 facing towards the reference element 28 and the reference element 28 itself, thus ensuring a better detection of the viscosity of the fluid, since the distance between said parts, jointly with the width thereof, creates a sort of channel or path portion where the fluid flows.

Preferably, the reference element 28 is juxtaposed to or anyway positioned near the sensing element 4, in such a way that it is substantially parallel to it and/or it lies at a substantially uniform distance from it or from a prevalent portion thereof.

The reference element 28 is arranged at such a distance from the sensing element 4 as to not interfere mechanically with the movements of the latter when in operation, but only through the effect mediated by the fluid, whereas the protective element 29 is arranged around the element 28 and the sensing element 4.

The latter 4 is shaped like a parallelepiped and is of the type with two layers having parallel and concordant polarization vectors (Y-poled). For this reason, the sensing element 4 must be powered by means of three contacts, which allow it to be effectively supplied with direct and/or alternating voltages preferably in the range of 12-13.8V, such as those typically available from automotive batteries.

In view of the use of such low voltages, it may be particularly advantageous to use benders wherein the piezoelectric active material is deposited by means of thin-film techniques, e.g. sputtering, pulsed plasma deposition or sol gel, or by means of thick-film techniques, in such a way as to limit the thickness of the piezoelectric material to hundreds of nanometres, for thin-film techniques, or tens of micrometres, for thick-film techniques. To increase displacement, multilayer solutions may be used, wherein multiple layers of active material are alternated with conductive layers acting as electrodes. As an extension of thick-film techniques, it is worth mentioning that the present device may be conveniently manufactured by using LTCC (Low Temperature Cofired Ceramics) techniques, which allow to create ceramic, conductive, resistive and even piezoelectric structural layers.

As shown also in Figures 4-6, the base 24 comprises a portion 24c which is so shaped that it can be at least partially inserted into the housing seat 11 of the fuel duct 1; said portion 24c of the base 24 also comprises a housing seat 24d, preferably circular, for housing the sealing element 21a, preferably an O-ring.

Furthermore, the base 24 comprises seats 24a for housing the contact elements 26, which in this embodiment are three; said contact elements 26 may advantageously be assembled or co-moulded with the base 24, so as to ensure a greater mechanical strength of the whole part.

In order to ensure a proper seal, thus avoiding any liquid leakage along the housing seats 24a, the sensor 2 comprises, for each contact element 26, two rigid O-rings 21b, preferably metal ones, between which there is a rubber O-ring 21c, so that the radial sealing of the O-ring 21c with respect to the base 24 is improved by the presence of the two rigid O-rings 21b; said O-rings 21b,21c are centred around the contact element 26 and are held in position by seats 24b comprised in the base 24. For the same reason explained above, they may also advantageously be assembled with or integrated into the base 24 by co-moulding.

The contact elements 26 electrically connect the contacts comprised in the sensing element 4, preferably two or three, to the cable 23. The electric connection between a contact element 26 and the sensing element 4 is obtained through metal terminals or wires 26a, the cross-section of which is preferably smaller than that of the contact elements 26, thus making it easier to lay and/or to connect them, also by bending, near the sensing element 4, and/or to solder them onto said sensing element 4; instead, the electric contact between the male contact elements 26 and the cable 23 is ensured by female terminals or contacts 20 and/or by soldering.

The terminals 20 may be so shaped as to be compatible with the seats 24b and/or they may be co-moulded with the base 24, for the same reasons explained above.

The connector 22 comprises a number of electric contacts (not shown in the drawings) which is preferably equal to the number of contact elements 26 that supply power to the sensing element 4; said electric contacts are in electric connection with the cable 23, and hence with the sensing element 4; said connector 22 may also be so shaped as to comply with any automotive standard or with any other standard.

For example, the connector 22 shown in the drawings falls within the models acknowledged by some automotive manufacturers or their providers (e.g. FIAT - Serie 150 Super Seal, Delphi Inc. - GT series); other existing models include, for example, the Metri-Pack series by Delphi, etc.

As regards the operation of the sensor 2, it is necessary to point out that the sensing element 4 is constrained along an axis A-A because of the interference between the slot 27a of the bender support 27 and one end of the sensing element 4 itself. When the sensing element 4 is supplied with alternating voltage, it bends along a prevalent direction that coincides with an axis B-B, orthogonal to the axis A-A. It is apparent that the end of the sensing element 4 which is farther from the bender support 27 is subject to greater displacement than the other parts of the sensing element 4.

Bender sensors may operate in two modes, i.e. as "generators" or as "actuators". In the present patent application, in one of the proposed sensor versions a portion of the piezoelectric element(s) is used as an actuator, and another one is used as a sensor to measure the actual deformation of the sensing element 4 at different instants of operation.

In an automotive installation like the one described herein, it is necessary to take into account the fact that the sensing element 4, even if it is receiving no power, will still vibrate because of the operation of the engine being fed by the duct 1, so that the sensing element 4 will produce a voltage containing noise components. For this reason, the operating frequency of the sensor will have to be selected higher than the frequencies generated by the engine and by other moving mechanical parts of the vehicle. In addition to increasing the sensor's sensitivity, a miniaturized bender also has higher resonance frequencies. The sensing element 4 shall have first-mode resonance frequencies comprised between 150 Hz and 30 kHz, preferably between 10 and 20 kHz.

In brief, a method for measuring the density and the viscosity of a liquid through the sensing element 4 comprises the following steps:

a. measuring a first resonance frequency of the sensing element 4 by applying thereto a peak voltage V1, e.g. 3V;
b. measuring a second resonance frequency with a peak voltage V2, greater than V 1, e.g. 12V;
c. estimating the density and viscosity values of the liquid in which the sensing element 4 is immersed on the basis of a predefined mapping.

As an alternative to the above-described method, a second method employing a single sensing element 4 but two oscillation modes, e.g. frequencies close to the first and second resonance frequencies, comprises the following steps:

a. measuring a first resonance frequency when the sensing element 4 is energized by a frequency f1 corresponding to the first vibration mode thereof;
b. measuring a second resonance frequency when the sensing element 4 is energized by a frequency f2 corresponding to the second vibration mode thereof;
c. estimating the density and viscosity values of the liquid fuel in which the sensing element 4 is immersed on the basis of a predefined mapping.

As an alternative to the above-described methods, a third method employing two sensing elements 4 with different constraints, hence having different characteristics comprises the following steps:

a. measuring a resonance frequency of the first sensing element 4;
b. measuring a resonance frequency of the second sensing element 4;
c. estimating the density and viscosity values of the liquid in which the sensing element 4 is immersed on the basis of a predefined mapping.

In general, the method shall comprise the use of n operating modes for estimating m parameters, where m is smaller than or equal to n (m <= n).

For example, one may use a single bender with a fixed frequency, preferably close to a resonance frequency, at n different voltages with respective different ratios between the influence of the parameter mainly dependent on density and the influence of the parameter mainly dependent on viscosity, so as to estimate m parameters, m being smaller than or equal to n. For example, one may create a map of the space defined by four damping values at four different supply voltages, defined in a space R4, in order to obtain, through a suitable transformation function, density, viscosity and pressure values defined in a space R3.

Likewise, the space R4 may be defined by two benders different from each other or having different constraints, powered by two different supply voltages. The resonance frequency of the sensing element 4 is affected by changes in the viscosity and density of the liquid. In fact, the higher the viscosity and the density of the liquid, the greater the resistance (drag) encountered by the sensing element 4 while moving.

The configuration used herein, with the reference elements 28 near the vibrating element, emphasizes the influence of viscosity on the sensor's response. thus making it possible to adjust the sensor's scale by positioning the elements 28 at an appropriate distance from the sensing element 4.

This resistance affects the resonance frequency value of the sensing element 4: the higher the viscosity, and hence the resistance offered to the movement of the sensing element 4, the lower the resonance frequency of the sensing element 4; on the contrary, the lower the viscosity, the higher the resonance frequency of the sensing element 4. With such a principle of measurement, it becomes preferable to mount the sensing element 4 in a position where it is not subject to forces due to fluid currents, vortices or the like. For this reason, protective elements 29 are preferably arranged around the sensing element 4 to protect the sensing element 4 against any disturbances: such protective elements 29 must ensure protection of the sensing element 4, while at the same time preventing stagnation of liquid around it to avoid affecting the measurement process.

Compared to the prior art, wherein a bender is placed into the fluid and the viscosity and density values are obtained from resonance frequency and peak width, in this case it is proposed to arrange reference elements 28 near the bender in order to force the fluid to flow with laminar motion in regions very close to the bender itself. It is in fact known that transverse waves propagate very little in fluids. By using suitable reference elements 28 arranged at a close distance from the bender, it is possible to amplify the effect of viscosity upon the variation of the resonance frequency value. It should be noted that, by inserting multiple piezoelectric elements (e.g. benders), one can measure both viscosity and density based solely on the resonance frequency value. For example, benders having different lengths and/or reference elements 28, as previously described, may be employed.

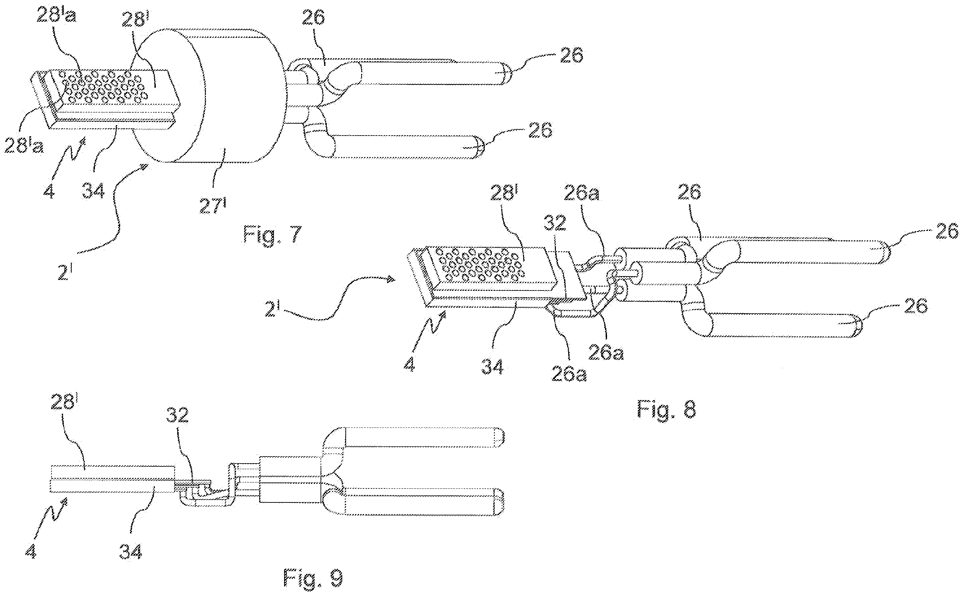

Of course, the example described so far may be subject to many variations. An embodiments of the sensor according to the present invention is shown in Figs. 7-9; for simplicity, the following description will only highlight those parts which make this and the next embodiments different from the above-described example which does not form part of the present invention; for the same reason, wherever possible the same reference numerals, with the addition of one or more apostrophes, will be used for indicating structurally or functionally equivalent elements.

This variant of the sensor $2^I$ utilizes reference and/or protective elements which differ from those of the previous example which does not form part of the present invention. In fact, a parallelepiped element $28^I$ replaces the element 28 used in the previous example. As far as the element 29 is concerned, it may still be present, but for the sake of simplicity it is not shown in the drawings.

The element $28^I$ has dimensions and shape comparable with those of the sensing element 4; said element $28^I$ is arranged substantially parallel to, i.e. juxtaposed to and equally spaced from, the sensing element 4 and/or a prevalent portion thereof, in the same position occupied in the previous example by the reference element 28.

The main difference between the elements 28 and is the presence of holes $28^I$a (already present in the protective element 29).

These holes $28^I$a have the function of forming channels in which the fluid to be analyzed can flow with laminar motion. They are also used to prevent stagnation of liquid on the surface of the sensing element 4, thus ensuring a constant flow of said liquid, and to protect said sensing element 4 against turbulences generated by the motion of the liquid to be measured.

The check element $28^I$ is positioned at a close distance from the sensing element 4, so as to define therewith a portion of the path of the fluid where at least one property of the fluid will be detected.

To hold the element $28^I$ in position, there is a bender support $27^I$ similar to the bender support 27 of the previous example.

The support $27^I$ differs from the support 27 for the presence of at least one slot (not shown in the drawings) compatible with one end of the reference element $28^I$.

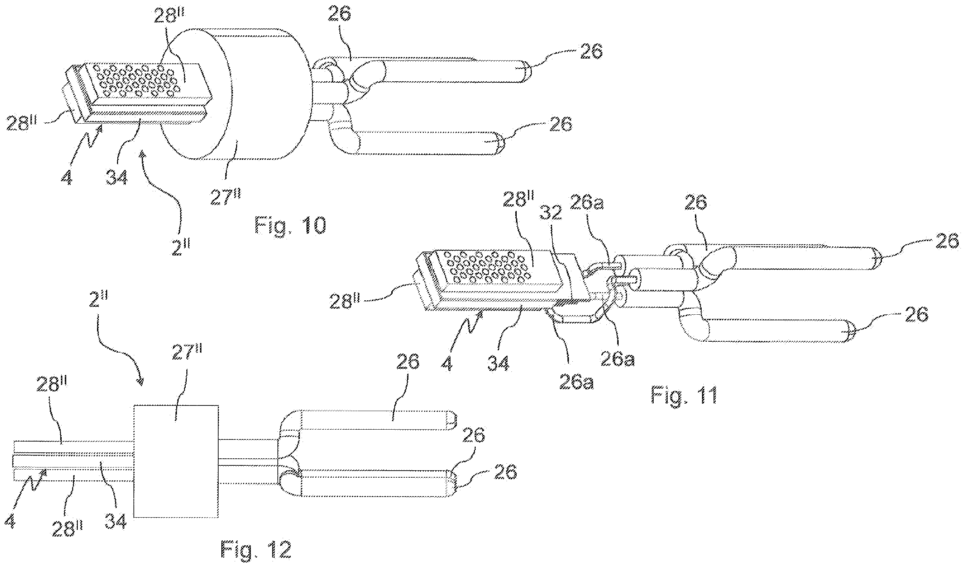

Figures 10-12 illustrate a second variant similar to the preceding one. The sensor $2^{II}$ of this variant differs from the preceding one for the presence of two elements $28^{II}$, each of which is substantially identical to the element 28' of the first variant.

Although the dimensions of the sensor are larger, this advantageously improves the measurability of a laminar motion of the liquid, because the intensity of the latter is increased by the presence of an additional element 28".

The larger space occupied by the sensor $2^{II}$ within the duct is compensated for by the increased resistance offered by the fluid to oscillation, thereby improving the sensitivity of said sensor $2^{II}$.

To hold both elements $28^I$ in position, there is a bender support $27^{II}$ similar to the bender support 27' of the previous example.

The support 27" differs from the support 27' for the presence of an additional slot (not shown in the drawings) compatible with the end of the second element 28".

Said supports 27.27',27" may advantageously be made by moulding a material directly over at least a portion of the sensing element 4 and/or of the reference element 28,28',28" and/or of the electric terminals or connections 26; in particular, by overmoulding a polymeric or thermoplastic or thermosetting or elastomeric material. Alternatively, said supports $27,27^I,27^{II}$ may advantageously be made by pouring a hardening material or a resin onto at least a portion of the sensing element 4 and/or of the reference element $28,28^I,28^{II}$ and/or of the electric terminals or connections 26. Said supports $27,27^I,27^{II}$ may advantageously create a sealing element as well.

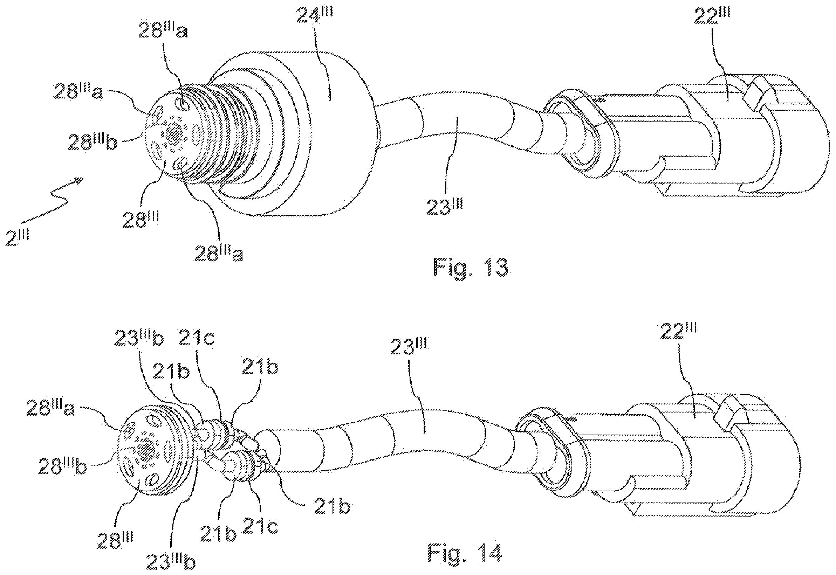

Another A thud variant is illustrated in Figures 13-18. This variant comprises a sensor $2^{III}$ with some differences compared to the sensors 2, 2', 2" taken into consideration so far.

A first difference is that the sensor $2^{III}$ comprises a substantially circular sensing element $4^{III}$; said sensing element $4^{III}$ comprises a membrane or passive element $31^{III}$ having the same functions as the passive element 31 previously described, preferably made of alumina, whereon electrodes and a piezoelectric or active layer $32^{III}$ having the same function as the active element 32 described in the previous examples have been silk-screened.

The sensor $2^{III}$ comprises a circular reference element $28^{III}$ with dimensions similar to those of the sensing element $4^{III}$, so that it can be superimposed thereon, thereby forming an interspace in which the liquid to be measured can flow.

The element $28^{III}$ performs the same functions as the elements 28 included in the preceding variants, and comprises holes $28^{III}$a,$28^{III}$b to allow for a laminar flow of the liquid to be measured.

Both holes $28^{III}$a, $28^{III}$b have preferably an elliptic shape and are arranged with radial symmetry. The holes $28^{III}$a are bigger than the holes $28^{III}$b. and said holes $28^{III}$a are located in the proximity of the edge of the element $28^{III}$,

whereas the holes 28$^{III}$b are located at the centre of said element 28$^{III}$.

The holes 28'''a, which are larger, offer less resistance to the flow. In fact, their main function is to improve the change of fluid within the interspace. Instead, the holes 28$^{III}$b mostly interact with the fluid motion generated by deformation of the sensing element 4$^{III}$, since they are smaller than the holes 28$^{III}$a and are positioned in front of the central part of the sensing element 4$^{III}$, where deformation is highest.

The sensing element 4$^{III}$ is so arranged that its axis coincides with that of a base 24$^{III}$, the latter being similar in shape and function to the base 24 of the main example.

The sensing element 4$^{III}$ is held in position and/or sealingly positioned by the action of a circular ring or sealing element 30, associated with or secured to the sensing element 4$^{III}$, wherein, in particular, said circular ring 30 acts upon the entire circular perimeter of a passive element 31$^{III}$ of the bender; said passive element 31$^{III}$ ensures that the active element 32$^{III}$ is positioned correctly, by resting on the base 24, and increases the overall rigidity of the sensing element 4$^{III}$.

This variant brings to the limit the cantilever concept already present in the main embodiment. In fact, the disc-like shape can be obtained through a process wherein, in a limit case, infinite sides of infinitesimal length are constrained along the perimeter of the sensing element 4$^{111}$, instead of just one side constrained as in the case shown in Fig. 7.

As an alternative, the circular bender may be made by silk-screening, directly on monolithic ceramic structures comprising a ceramic membrane a few tens of micrometres thick and a thicker circular ceramic crown supporting it, i.e. by silk-screening or depositing a piezoelectric active element 32$^{III}$ directly onto the passive element 31'''; said passive element 31$^{III}$ is a membrane that advantageously allows to increase the rigidity of the piezoelectric active element 32$^{III}$, thus attaining the same advantages already described.

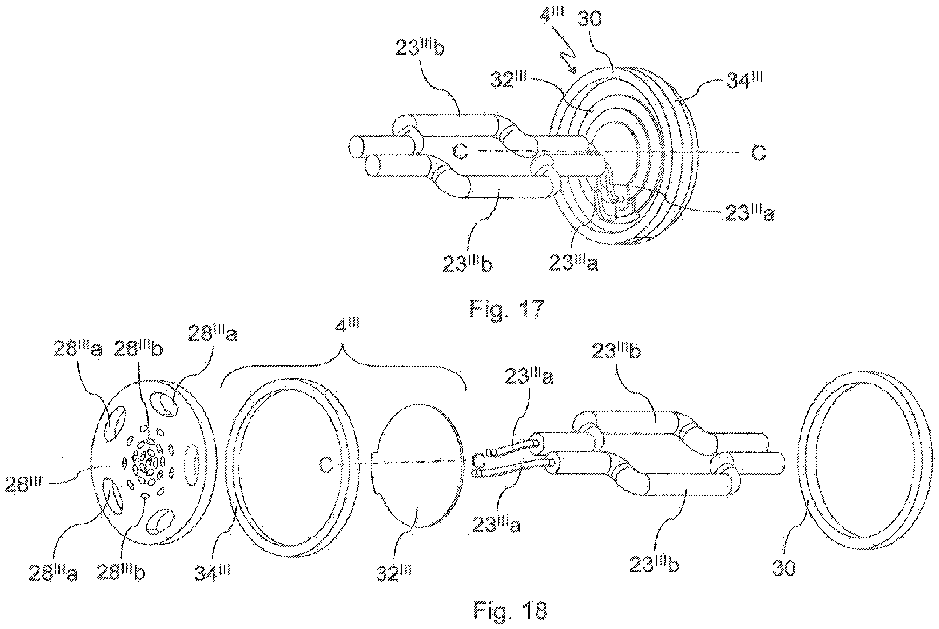

When the sensing element 4$^{III}$ is supplied with alternating current, it moves along an axis C-C shown in Figures 17 e 18, and the part with the longest travel is its centre.

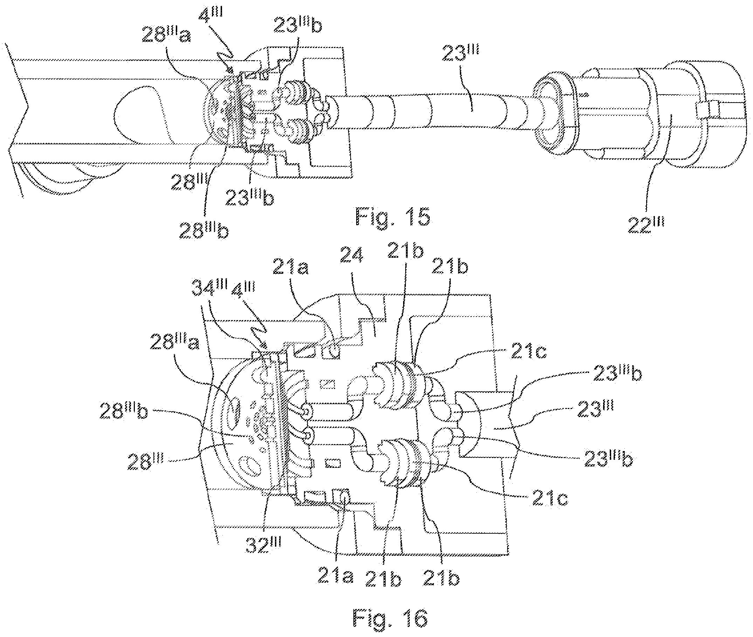

The sensing element 4$^{111}$ is powered by means of a bipolar cable 23$^{III}$, which puts the sensing element into electric contact with a connector 22$^{III}$ similar to the connector 22 used in the previous variants; said connector 22''' comprises two electric contacts, respectively connected to the two conductors 23$^{III}$b comprised in the bipolar cable 23$^{III}$ (as shown in Fig. 16).

Each one of the conductors 23'''b includes an internal wire 23'''a that provides a direct electric contact between the active element 32''' and the connector 22$^{III}$, without the terminals 20 used in the previous variants.

The electric contacts must be soldered in a peripheral region relative to the membrane centre, in order to avoid damping the bender's motion.

In this variant, the sensing element 4$^{III}$ is not immersed in the liquid to be measured, since only one face thereof is lapped by said liquid.

For the purpose of limiting the quantity of vibrations picked up by the sensing element 4$^{III}$, it is preferable to place said sensing element 4$^{III}$ in a position wherein the axis C-C is perpendicular to the direction in which the vibrations produced by the operation of the engine are greatest.

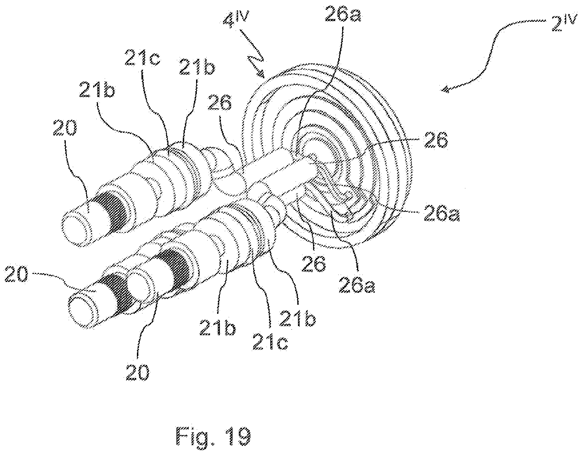

Finally, another a fourth variant is shown in Fig. 19. This variant differs from the preceding one mainly because it comprises a partition of an electrode of the circular bender-type sensing element 4$^{IV}$; said bender 4$^{IV}$ comprises, in fact, three piezoelectric elements positioned on one face of the passive membrane, which is preferably made of alumina, together with the respective electrodes.

This bender 4$^{IV}$ allows to supply power to one piezoelectric active element through a contact, while the other piezoelectric active element can be used as a sensor for measuring the deformation of the membrane. The same concept is of course applicable to the above-described rectangular benders by appropriately configuring the electrodes, i.e. it is possible to use benders having one or two or more active elements.

Furthermore, in order to ensure the electric contact between the bender 4$^{IV}$ and the measurement circuit, this variant utilizes the same means already employed in the main example, i.e. the contact elements 26, the terminals 20, the tripolar cable 23 and the connector 22.

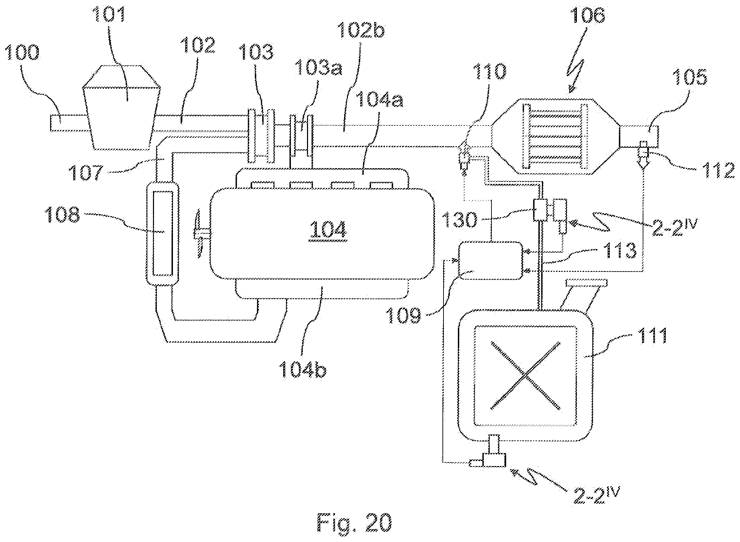

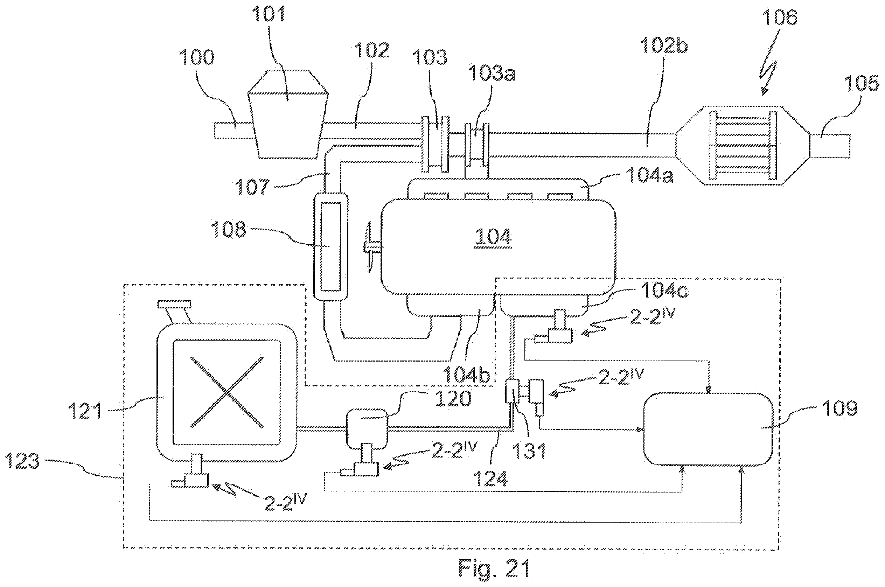

Figures 20 and 21 illustrate two examples of application of the sensor 2 according to the invention.

In particular, Figure 20 schematically represents one example of application of the sensor 2-2'\ wherein said sensor 2-i$^v$ is coupled to a system for injecting an additive into an automotive engine, for the purpose of reducing exhaust emissions such as nitrogen oxides ($NO_x$), carbon monoxide and carbon dioxide (CO and $CO_2$), and particulate matter (PM).

Said injection system utilizes the Selective Catalytic Reduction (SCR), which is a known emission reduction process.

In practice, during said process a reducing chemical agent (e.g. the product commercially available as AdBlue) in the liquid state is added to the exhaust gases in the presence of a catalyst: the reductant reacts with the nitrogen oxides (NOx) found in the exhaust gases, thus forming water vapour ($H_2O$) and gaseous nitrogen ($N_2$).

To do so, it is necessary that the liquid reducing agent is accurately metered by means of an injector.

In the example of Fig. 20, the emission control system comprises an air inlet duct 100, associated with an air inlet filter 101 and an air intake pipe 102, which puts the filter 101 in fluidic communication with a turbocharger stage comprising a turbine 103a and a compressor 103.

The emission control system is associated with an internal combustion engine 104 comprising an exhaust manifold 104a connected to the turbine 103a, the outlet of the turbine 103a being in turn connected to an exhaust pipe 102b, along which there is a catalyst assembly 106 that carries out the SCR catalytic reaction.

The air intake pipe 102 is in fluidic communication with the inlet of the compressor 103, which communicates downstream with an intake manifold 104b of the engine 104 through a channel 107, along which, in this case, a cooling stage 108 (also called intercooler) is installed.

The air flow is aspirated through the inlet 100, downstream of which the filter 101 traps any suspended solid particles, e.g. dust. Once filtered, the air flow enters the turbocharger 103, where it is compressed, and is then forced into the intake manifold 104b, thus generating a compressed air flow and feeding the cylinders of the engine 104 with a mass of air which is greater than that which they could take in without compression.

The compressor 103 is connected through a shaft to the turbine 103a, which is rotated by the exhaust gases coming from the manifold 104a.

Before being sent to the intake manifold 104b, the compressed air flow exiting the compressor 103 is cooled through the stage 108, i.e. a thermal exchanger (of the air/air or air/water type) that cools the air exiting the turbocharger before it enters the engine 104.

In order to optimize the operation of the SCR system, suitable air pressure and/or temperature and/or humidity sensors (not shown in the drawings) are used, so that the control unit 109 can meter at best a reducing agent (e.g. AdBlue).

To this end, the system of Fig. 20 includes an injector 110 for injecting the reducing agent in liquid form, located upstream of the catalyst assembly 106.

The metering of said reducing agent is done by the control unit 109, which controls all the physical parameters involved in the Selective Catalyst Reduction (SCR) reaction.

The reducing agent sprayed by the injector 110 breaks up when it comes in contact with the hot exhaust gases, thus generating ammonia, which reacts with the nitrogen oxides in the catalyst 106 and transforms them into nitrogen and water particles. The control unit 109 performs an accurate metering of the reducing agent, which has been added into a specific tank 111. The electronic unit 109 that controls the metering process is connected to the engine electronics, and creates a balanced mixture of reducing agent and exhaust gases based on engine parameters (such as intake air temperature, water temperature, intake air flow, rpm), so that the reducing agent is always injected in the correct quantity.

To optimize this process, a sensor 112 is used, which may be sensitive to either ammonia ($NH_3$) or NOx, and which is positioned on the exhaust pipe 105 downstream of the catalyst 106. The detection carried out by the sensor 112 is very important, because it is on the basis of such detection that the optimal quantity of reducing agent to be sprayed by the injector 110 is adjusted.

In accordance with the invention, at least one bender sensor 2-i$^v$ is included in order to detect the characteristics of the reducing agent used in the vehicle, such as a bender sensor 2-2$^{IV}$ adapted to detect the characteristics of the additive (e.g. AdBlue) fed from the tank 111 to the pipe 102b upstream of the catalyst assembly, in particular through a duct 113 connected between the tank 111 and the injector 110.

To this end, the bender sensor 2,2$^{IV}$ may be directly installed in the additive tank and/or in a portion 130 of said hydraulic duct 113 that carries the additive from the tank to the pipe 102b.

The sensor 2-2$^{IV}$ is connected to the control unit 109, to allow for appropriate detections and/or adjustments depending on the characteristics of the additive.

For example, the bender sensor 2-i$^v$ may detect more or less diluted additive/urea, or a variable water content, and the metering of the additive and/or other engine parameters will be adjusted accordingly.

Fig. 21 illustrates a further application variant of the bender sensor according to the invention, for controlling the characteristics of a lubricant or an oil used by the engine 104. This application can be implemented independently of the preceding application concerning an SCR emission control system, or such applications may be both present in the same combustion engine.

Although Figure 21 also shows the catalyst assembly 106, for clarity only the part concerning an engine lubrication circuit 123 has been highlighted, which comprises an oil or lubricant tank 121 and an oil sump 104c, which is comprised in the engine 104 and is connected to said tank 1 23 by means of a duct 124.

In the lubrication system 123 there is at least one bender sensor 2-i$^v$ according to the invention, which may be located in the engine (e.g. in the oil sump 104c) and/or in a portion 131 of the duct 124 and/or in an oil filter 120 and/or in the oil tank 121.

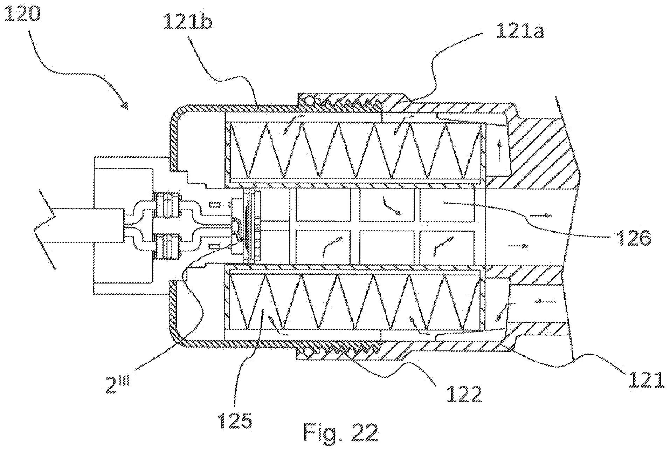

A possible application of the sensor according to the invention to a filter 120 is visible more in detail in Figure 22, which shows the cross-section of a filter, such as a typical filter for oil, fuel, diesel oil or the like.

The filter 120 comprises an external housing 121 with cylindrical geometry, made up of two cup-like portions 121a, 121b screwed together at a thread 122.

The housing accommodates a filter cartridge 125 of a *per se* known type, which circumscribes an axial channel 126 of the filter, to one end of which the bender sensor 2$^{III}$ is applied. The bender sensor 2$^{III}$ is secured to the portion 121b of the housing 121, such that it is positioned inside the duct 126 of the filter 120 where filtered oil flows, thus advantageously preventing any damage to the bender sensor $2^{III}$, which might otherwise be caused by suspended corpuscles in the oil. The bender sensor $2^{III}$ may however also be installed upstream of the filter 120.

The circular geometry of the sensor is well suited to that of the filter 120, but it is apparent that also the other shapes of the sensor 2, $2^I$, $2^{II}$ of the invention may be used in association with the filter 120 or, more in general, with a wall of a housing like that of this filter.

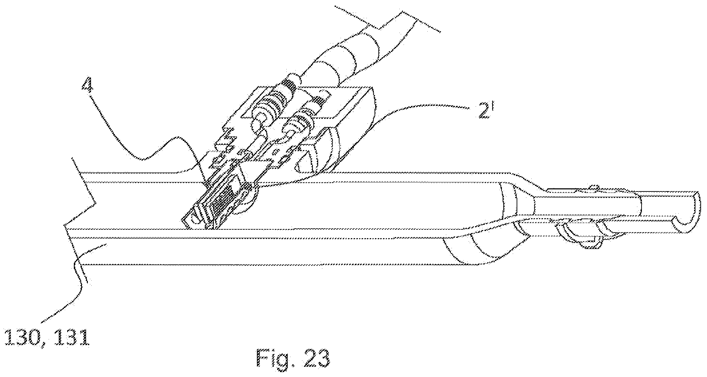

This is the case, for example, of the oil tank 121 or oil sump 104c associated with the internal combustion engine 104, or a manifold portion 130, 131 like the one shown in Figures 21, 22 and 23.

In this case, a sensor $2^I$ like the one already described above is applied transversally to the longitudinal extension of the manifold 130, thus demonstrating the versatility of use of the sensor according to the invention.

In other words, it can be stated that the performance of the latter, resulting from its structural and operating characteristics specified above with reference to the various examples of embodiment described herein, allow for numerous applications of a bender sensor in accordance with the invention.

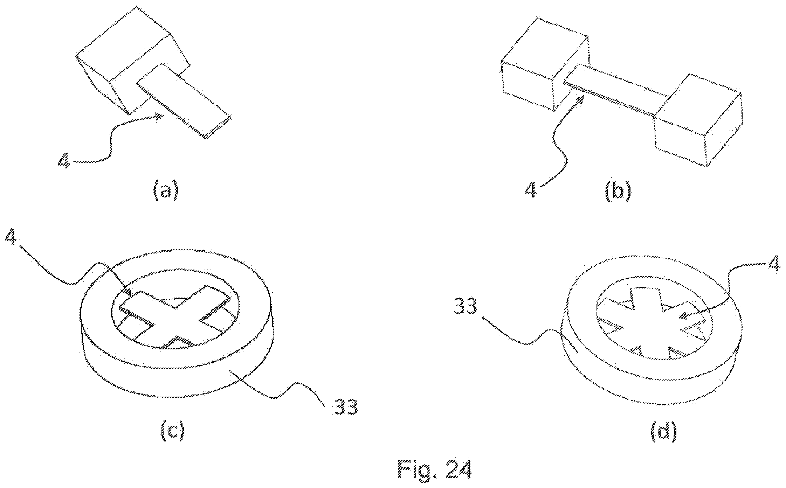

Depending on such applications, other sensor variants are also possible, such as those shown in Figs. 24(a)-24(d). These drawings show various schematic representations of the passive element 31 and of the active element 32, which make up the sensing element 4; such elements may be supported at one end only (as in the examples of Fig. 1-10) or at both ends (Fig. 24(b)).

The sensing element 4, and in particular its (non-piezoelectric) passive element, may however also be supported by means of a rigid annular body 33 such as the one shown in Figs. 24(c) and 24(d).

As a result, the sensor will possibly have a cross-like or star-like shape, as shown in Figures 24(c) and 24(d), respectively.

All of the examples and variants described above can be adapted to the different types of fluids for which the sensor is intended; in particular, the fluids, which may be liquid, gaseous or mixed ones (e.g. emulsions, suspensions, foams, etc.), may be oils, automotive fuels, wash liquids, or various additives.

Furthermore, the reference element $28\text{-}28^{III}$, which has been described and exemplified herein as a substantially rigid element, may also be of another type or material suitable for the intended purpose; for example, a bendable material such as a metal lamina, or a slightly elastic material such as a bendable thermoplastic material or a rigid elastomer.

All of the possible variants which will be apparent to those skilled in the art will nevertheless fall within the scope of the following claims; in this regard, the various details and shapes thereof may be changed with respect to those described herein by way of example, and the single features described and/or illustrated herein may be combined together to create devices which may even be different from what has been indicated herein by way of non-limiting example.

## Claims

1.    A sensor for detecting at least one of the density or the viscosity of a liquid, comprising a sensing element (4, $4^{III}$, $4^{IV}$) for the contact with said fluid, and wherein the state of said sensing element (4, $4^{III}$, $4^{IV}$) is affected by at least one of the density or viscosity of the liquid,

and wherein the sensing element (4, $4^{III}$, $4^{IV}$) comprises a bender-type piezoelectric active element (32,$32^{III}$), wherein means are associated with the sensing element (4, $4^{III}$, $4^{IV}$) for detecting the resonance frequency of said sensing element (4, $4^{III}$, $4^{IV}$) and/or the damping of the oscillation thereof at a fixed frequency **characterized in that**
it comprises at least one reference element (28, $28^I$, $28^{II}$, $28^{III}$) juxtaposed to or positioned near the sensing element (4, $4^{III}$, $4^{IV}$), in such a way that it lies at a substantially uniform distance from said sensing element (4, $4^{III}$, $4^{IV}$) or from a prevalent part thereof, so as to define therewith at least a portion of the liquid path where at least one of the density or viscosity of the liquid will be detected, holes ($28^I$a, $28^{III}$a, $28^{III}$b) being present in said reference element (28, $28^I$, $28^{II}$, $28^{III}$) that have the function of forming channels for the liquid, for allowing the liquid to flow with laminar motion,
and wherein the reference element ($28^I$, $28^{II}$, $28^{III}$) operates as a check or damping element wherein said distance from the sensing element (4, $4^{III}$, $4^{IV}$) is such as to increase the degree of damping or to enhance measurement sensitivity by increasing the resonance frequency variation occurring as density/viscosity change.

2.    A sensor according to claim 1, wherein the reference element (28, $28^I$, $28^{II}$, $28^{III}$) is substantially parallel to the sensing element (4, $4^{III}$, $4^{IV}$) or a prevalent portion thereof.

3.    A sensor according to claim 1 or 2, comprising a passive element (31,$31^{III}$) associated with the active element (32,32$^{III}$) and cooperating therewith to interact with the liquid when detecting said at least one property.

4. A sensor according to any one of the preceding claims, wherein the active element (32,32$^{III}$) substantially has a shape chosen among the following: parallelepiped, cruciform, polygonal, annular, circular.

5. A sensor according to any one of the preceding claims, wherein the passive element (31,31$^{III}$) substantially has a shape chosen among the following: parallelepiped, cruciform, polygonal, annular, circular.

6. A sensor according to any of the preceding claims, wherein the means associated with the sensing element (4, 4$^{III}$, 4$^{IV}$) for detecting the resonance frequency and/or the damping of the oscillation thereof comprise a measurement circuit.

7. A sensor according to any one of the preceding claims, comprising at least one protective element (29) capable of protecting the sensing element (4, 4$^{III}$, 4$^{IV}$), in particular against any disturbance caused by the liquid fuel flow and/or by particles dispersed in said liquid fuel.

8. A sensor according to any one of the preceding claims, comprising a base or housing (24) having a shape at least partly compatible with a housing seat (11) comprised in a fuel duct (1).

9. A fuel duct (1) comprising a sensor (2-2$^{IV}$) according to any one of the preceding claims.

10. Use of a sensor according to any one of claims 1 to 8, for detecting at least one of the density or the viscosity of a liquid in at least one of a duct, a tank, a filter.

11. Use of a sensor according to claim 10 , for automotive applications.

12. A method for detecting at least the density or the viscosity of a liquid, by means of a sensor (2-2$^{IV}$) of any of the claims 1 to 10 and wherein the method comprises the steps of:

    a. measuring a first resonance frequency of the sensing element (4, 4$^{III}$, 4$^{IV}$) by applying thereto a peak voltage V1;
    b. measuring a second resonance frequency by applying a peak voltage V2, greater than V1, to said sensing element (4, 4$^{III}$, 4$^{IV}$);
    c. estimating the values of the density and or viscosity of the liquid in which the sensing element (4, 4$^{III}$, 4$^{IV}$) is immersed, on the basis of a predefined mapping.

13. A method for detecting at least one of the density or viscosity of a liquid, by means of a sensor (2-2$^{IV}$), of any of the claims 1-10, and wherein the method comprises the steps of:

    a. measuring a first resonance frequency when the sensing element (4, 4$^{III}$, 4$^{IV}$) is energized by a frequency f1 corresponding to a first vibration mode thereof;
    b. measuring a second resonance frequency when the sensing element (4, 4$^{III}$, 4$^{IV}$) is energized by a frequency f2 corresponding to a second vibration mode thereof;
    c. estimating the values of at least one of the density or viscosity of the liquid in which the sensing element (4, 4$^{III}$, 4$^{IV}$) is immersed, on the basis of a predefined mapping.

14. A method for detecting at least one of the density or the viscosity of a liquid, by means of a pair of sensors (2-2$^{IV}$), according to any of the claims 1 to 10, wherein said sensors (2-2$^{IV}$) have different characteristics and comprise, respectively, a first sensing element (4, 4$^{III}$, 4$^{IV}$) comprising a first active element (32, 32$^{III}$), and a second sensing element (4, 4$^{III}$, 4$^{IV}$) comprising a second active element (32, 32$^{III}$), and wherein the method comprises the steps of:

    a. measuring the resonance frequency of the first sensing element (4, 4$^{III}$, 4$^{IV}$) when the sensing element (4, 4$^{III}$, 4$^{IV}$) is energized by a frequency f1 corresponding to a first vibration mode thereof;
    b. measuring the resonance frequency of the second sensing element (4, 4$^{III}$, 4$^{IV}$) when the sensing element (4, 4$^{III}$, 4$^{IV}$) is energized by a frequency f2 corresponding to a second vibration mode thereof;
    c. estimating the values of a property of the fluid in which the sensing elements (4, 4$^{III}$, 4$^{IV}$) are immersed, such as the density or viscosity values of said liquid , or on the basis of a predefined mapping.

15. A method according to any one of claims 12 to 14 , wherein at least one sensor (2-2$^{IV,}$ 4, 4$^{III}$, 4$^{IV}$) is associated with multiple reference elements (28, 28$^I$, 28$^{II}$, 28$^{III}$), wherein said reference elements (28, 28$^I$, 28$^{II}$, 28$^{III}$) are preferably different from one another, so that a first sensor (2, 2$^{III}$) will have different features from a second sensor (2, 2$^{III}$).

**Patentansprüche**

1. Sensor zum Bestimmen zumindest eines der Dichte oder der Viskosität einer Flüssigkeit, umfassend ein Sensorelement (4, 4$^{III}$, 4$^{IV}$) für den Kontakt mit der Flüssigkeit, und wobei der Zustand des Sensorelements (4, 4$^{III}$, 4$^{IV}$) zumindest von einem der Dichte oder Viskosität der Flüssigkeit beeinflusst wird,

   und wobei das Sensorelement (4, 4$^{III}$, 4$^{IV}$) ein aktives piezoelektrisches Element (32, 32$^{III}$) vom Typ Bieger umfasst,
   wobei Mittel mit dem Sensorelement (4, 4$^{III}$, 4$^{IV}$) verknüpft sind, um die Resonanzfrequenz des Sensorelements (4, 4$^{III}$, 4$^{IV}$) und/oder die Dämpfung der Schwingung davon bei einer fixen Frequenz zu bestimmen,
   **dadurch gekennzeichnet, dass**
   er zumindest ein Referenzelement (28, 28$^I$, 28", 28$^{III}$) umfasst, welches neben oder nahe dem Sensorelement (4, 4$^{III}$, 4$^{IV}$) auf eine solche Weise positioniert ist, dass es sich im Wesentlichen in einer einheitlichen Distanz von dem Sensorelement (4, 4$^{III}$, 4$^{IV}$) oder von einem vorherrschenden Teil davon befindet, sodass damit zumindest ein Abschnitt des Flüssigkeitspfads definiert wird, wo zumindest eines der Dichte oder Viskosität der Flüssigkeit bestimmt wird,
   Löcher (28$^I$a, 28$^{III}$a, 281$^{III}$b) in dem Referenzelement (28, 28$^I$, 28", 28$^{III}$) vorhanden sind, welche die Funktion aufweisen, Kanäle für die Flüssigkeit zu bilden, um der Flüssigkeit zu erlauben, mit laminarer Bewegung zu fließen,
   und wobei das Referenzelement (28$^I$, 28", 28$^{III}$) als ein Prüf- oder Dämpfungselement funktioniert, wobei die Distanz von dem Sensorelement (4, 4$^{III}$, 4$^{IV}$) so ist, dass der Grad der Dämpfung erhöht wird oder dass Messempfindlichkeit verbessert wird, indem die Resonanzfrequenzabweichung erhöht wird, welche auftritt, wenn sich Dichte/Viskosität ändern.

2. Sensor nach Anspruch 1, wobei das Referenzelement (28, 28$^I$, 28", 28$^{III}$) im Wesentlichen parallel zu dem Sensorelement (4, 4$^{III}$, 4$^{IV}$) oder einem vorherrschenden Abschnitt davon ist.

3. Sensor nach Anspruch 1 oder 2, umfassend ein passives Element (31, 31$^{III}$), welches mit dem aktiven Element (32, 32$^{III}$) verknüpft ist und damit zusammenarbeitet, um mit der Flüssigkeit zu interagieren, wenn die zumindest eine Eigenschaft bestimmt wird.

4. Sensor nach einem der vorstehenden Ansprüche, wobei das aktive Element (32, 32$^{III}$) im Wesentlichen eine Form aufweist, welche aus den folgenden ausgewählt ist: parallelflach, kreuzförmig, polygonal, ringförmig, kreisförmig.

5. Sensor nach einem der vorstehenden Ansprüche, wobei das passive Element (31, 31$^{III}$) im Wesentlichen eine Form aufweist, welche aus den folgenden ausgewählt ist:

   parallelflach, kreuzförmig,
   polygonal, ringförmig, kreisförmig.

6. Sensor nach einem der vorstehenden Ansprüche, wobei die Mittel, welche mit dem Sensorelement (4, 4$^{III}$, 4$^{IV}$) verknüpft sind, um die Resonanzfrequenz und/oder die Dämpfung der Schwingung davon zu bestimmen, eine Messschaltung umfassen.

7. Sensor nach einem der vorstehenden Ansprüche, umfassend zumindest ein Schutzelement (29), welches fähig ist, das Sensorelement (4, 4$^{III}$, 4$^{IV}$) zu schützen, insbesondere gegen jedwede Störung, welche durch den Fluss des Flüssigbrennstoffs und/oder durch in dem Flüssigbrennstoff aufgelöste Partikel verursacht wird.

8. Sensor nach einem der vorstehenden Ansprüche, umfassend einen Sockel oder ein Gehäuse (24) mit einer Form, welche zumindest teilweise mit einem in einem Brennstoffkanal (1) enthaltenen Gehäuseaufsatz (11) kompatibel ist.

9. Brennstoffkanal (1), umfassend einen Sensor (2-2$^{IV}$) nach einem der vorstehenden Ansprüche.

10. Verwendung eines Sensors nach einem der Ansprüche 1 bis 8 zum Bestimmen zumindest eines der Dichte oder der Viskosität einer Flüssigkeit in zumindest einem von einem Kanal, einem Tank, einem Filter.

**11.** Verwendung eines Sensors nach Anspruch 10 für Automobilanwendungen.

**12.** Verfahren zum Bestimmen zumindest der Dichte oder der Viskosität einer Flüssigkeit mittels eines Sensors (2-2$^{IV}$) nach einem der Ansprüche 1 bis 10 und wobei das Verfahren die folgenden Schritte umfasst:

> a. Messen einer ersten Resonanzfrequenz des Sensorelements (4,4$^{III}$, 4$^{IV}$) durch Anlegen einer Spitzenspannung V1 daran;
> b. Messen einer zweiten Resonanzfrequenz durch Anlegen einer Spitzenspannung V2, welche größer als V1 ist, an das Sensorelement (4, 4$^{III}$, 4$^{IV}$);
> c. Schätzen der Werte der Dichte und oder Viskosität der Flüssigkeit, in welche das Sensorelement (4, 4$^{III}$, 4$^{IV}$) eingetaucht ist, auf der Basis einer vordefinierten Zuordnung.

**13.** Verfahren zum Bestimmen zumindest eines der Dichte oder Viskosität einer Flüssigkeit mittels eines Sensors (2-2$^{IV}$) nach einem der Ansprüche 1-10 und wobei das Verfahren die folgenden Schritte umfasst:

> a. Messen einer ersten Resonanzfrequenz, wenn das Sensorelement (4, 4$^{III}$, 4$^{IV}$) durch eine Frequenz f1 stromführend ist, welche einem ersten Vibrationsmodus davon entspricht;
> b. Messen einer zweiten Resonanzfrequenz, wenn das Sensorelement (4, 4$^{III}$, 4$^{IV}$) durch eine Frequenz f2 stromführend ist, welche einem zweite Vibrationsmodus davon entspricht;
> c. Schätzen der Werte zumindest eines der Dichte oder Viskosität der Flüssigkeit, in welche das Sensorelement (4, 4$^{III}$, 4$^{IV}$) eingetaucht ist, auf der Basis einer vordefinierten Zuordnung.

**14.** Verfahren zum Bestimmen zumindest eines der Dichte oder der Viskosität einer Flüssigkeit mittels eines Paars von Sensoren (2-2$^{IV}$) nach einem der Ansprüche 1 bis 10, wobei die Sensoren (2-2$^{IV}$) unterschiedliche Merkmale aufweisen und jeweils ein erstes Sensorelement (4, 4$^{III}$, 4$^{IV}$), welches ein erstes aktives Element (32, 32$^{III}$) umfasst, und ein zweites Sensorelement (4, 4$^{111}$, 4$^{IV}$) umfassen, welches ein zweites aktives Element (32, 32$^{III}$) umfasst, und wobei das Verfahren die folgenden Schritte umfasst:

> a. Messen der Resonanzfrequenz des ersten Sensorelements (4, 4$^{III}$, 4$^{IV}$), wenn das Sensorelement (4, 4$^{III}$, 4$^{IV}$) durch eine Frequenz f1 stromführend ist, welche einem ersten Vibrationsmodus davon entspricht;
> b. Messen der Resonanzfrequenz des zweiten Sensorelements (4, 4$^{III}$, 4IV), wenn das Sensorelement (4, 4$^{III}$, 4$^{IV}$) durch eine Frequenz f2 stromführend ist, welche einem zweite Vibrationsmodus davon entspricht;
> c. Schätzen der Werte einer Eigenschaft der Flüssigkeit, in welche die Sensorelemente (4, 4$^{III}$, 4$^{IV}$) eingetaucht sind, beispielsweise der Dichte- oder Viskositätswerte der Flüssigkeit, auf der Basis einer vordefinierten Zuordnung.

**15.** Verfahren nach einem der Ansprüche 12 bis 14, wobei zumindest ein Sensor (2-2$^{IV}$, 4, 4$^{III}$, 4$^{IV}$) mit mehreren Referenzelementen (28, 28$^{I}$, 28", 28$^{III}$) verknüpft ist, wobei die Referenzelemente (28, 28$^{I}$, 28", 28$^{III}$) bevorzugt voneinander unterschiedlich sind, sodass ein erster Sensor (2, 2$^{III}$) Merkmale aufweist, welche sich von denen eines zweiten Sensors (2, 2$^{III}$) unterscheiden.

**Revendications**

**1.** - Capteur pour détecter au moins une parmi la densité et la viscosité d'un liquide, comprenant un élément de détection (4, 4$^{III}$, 4$^{IV}$) pour le contact avec ledit fluide, et l'état dudit élément de détection (4, 4$^{III}$, 4$^{IV}$) étant affecté par au moins une parmi la densité et la viscosité du liquide, et

> l'élément de détection (4, 4$^{III}$, 4$^{IV}$) comprenant un élément actif piézoélectrique de type à flexion (32, 32$^{III}$), des moyens étant associés à l'élément de détection (4, 4$^{III}$, 4$^{IV}$) pour détecter la fréquence de résonance dudit élément de détection (4, 4$^{III}$, 4$^{IV}$) et/ou l'amortissement de son oscillation à une fréquence fixe, **caractérisé par le fait qu'**il comprend au moins un élément de référence (28, 28$^{I}$, 28$^{II}$, 28$^{III}$) juxtaposé à ou positionné près de l'élément de détection (4, 4$^{III}$, 4$^{IV}$) d'une manière telle qu'il se trouve à une distance sensiblement uniforme dudit élément de détection (4, 4$^{III}$, 4$^{IV}$) ou d'une partie prévalente de celui-ci, de façon à définir avec celui-ci au moins une partie du trajet de liquide où au moins une parmi la densité et la viscosité du liquide sera détectée,

des trous (28$^I$a, 28$^{III}$a, 28$^{III}$b) étant présents dans ledit élément de référence (28, 28$^I$, 28$^{II}$, 28$^{III}$), lesquels ont pour fonction de former des canaux pour le liquide, pour permettre au liquide de s'écouler avec un mouvement laminaire, et

l'élément de référence (28, 28$^I$, 28$^{II}$, 28$^{III}$) fonctionnant comme un élément de contrôle ou d'amortissement, ladite distance par rapport à l'élément de détection (4, 4$^{III}$, 4$^{IV}$) étant telle qu'elle permet d'augmenter le degré d'amortissement ou d'améliorer la sensibilité de mesure par augmentation de la variation de fréquence de résonance apparaissant lors d'un changement de densité/viscosité.

**2.** - Capteur selon la revendication 1, dans lequel l'élément de référence (28, 28$^I$, 28$^{II}$, 28$^{III}$) est sensiblement parallèle à l'élément de détection (4, 4$^{III}$, 4$^{IV}$) ou à une partie prévalente de celui-ci.

**3.** - Capteur selon la revendication 1 ou 2, comprenant un élément passif (31, 31$^{III}$) associé à l'élément actif (32, 32$^{III}$) et coopérant avec celui-ci pour interagir avec le liquide lors de la détection de ladite au moins une propriété.

**4.** - Capteur selon l'une quelconque des revendications précédentes, dans lequel l'élément actif (32, 32$^{III}$) a sensiblement une forme choisie parmi les suivantes : parallélépipédique, cruciforme, polygonale, annulaire, circulaire.

**5.** - Capteur selon l'une quelconque des revendications précédentes, dans lequel l'élément passif (31, 31$^{III}$) a sensiblement une forme choisie parmi les suivantes : parallélépipédique, cruciforme, polygonale, annulaire, circulaire.

**6.** - Capteur selon l'une quelconque des revendications précédentes, dans lequel les moyens associés à l'élément de détection (4, 4$^{III}$, 4$^{IV}$) pour détecter la fréquence de résonance et/ou l'amortissement de son oscillation comprennent un circuit de mesure.

**7.** - Capteur selon l'une quelconque des revendications précédentes, comprenant au moins un élément de protection (29) apte à protéger l'élément de détection (4, 4$^{III}$, 4$^{IV}$), notamment contre toute perturbation provoquée par l'écoulement de carburant liquide et/ou par des particules dispersées dans ledit carburant liquide.

**8.** - Capteur selon l'une quelconque des revendications précédentes, comprenant une base ou un boîtier (24) ayant une forme au moins en partie compatible avec un siège de boîtier (11) compris dans un conduit à carburant (1).

**9.** - Conduit à carburant (1) comprenant un capteur (2-2$^{IV}$) selon l'une quelconque des revendications précédentes.

**10.** - Utilisation d'un capteur selon l'une quelconque des revendications 1 à 8, pour détecter au moins une parmi la densité et la viscosité d'un liquide dans au moins un parmi un conduit, un réservoir, un filtre.

**11.** - Utilisation d'un capteur selon la revendication 10, pour des applications automobiles.

**12.** - Procédé pour détecter au moins la densité ou la viscosité d'un liquide, au moyen d'un capteur (2-2$^{IV}$) selon l'une quelconque des revendications 1 à 10, et le procédé comprenant les étapes :

a. mesurer une première fréquence de résonance de l'élément de détection (4, 4$^{III}$, 4$^{IV}$) par application à celui-ci d'une tension de crête V1 ;
b. mesurer une seconde fréquence de résonance par application d'une tension de crête V2, supérieure à V1, audit élément de détection (4, 4$^{III}$, 4$^{IV}$) ;
c. estimer les valeurs de la densité et/ou de la viscosité du liquide dans lequel l'élément de détection (4, 4$^{III}$, 4$^{IV}$) est immergé, sur la base d'une cartographie prédéfinie.

**13.** - Procédé pour détecter au moins une parmi la densité et la viscosité d'un liquide, au moyen d'un capteur (2-2$^{IV}$) selon l'une quelconque des revendications 1 à 10, et le procédé comprenant les étapes :

a. mesurer une première fréquence de résonance lorsque l'élément de détection (4, 4$^{III}$, 4$^{IV}$) est excité par une fréquence f1 correspondant à un premier mode de vibration de celui-ci ;
b. mesurer une seconde fréquence de résonance lorsque l'élément de détection (4, 4$^{III}$, 4$^{IV}$) est excité par une fréquence f2 correspondant à un second mode de vibration de celui-ci ;
c. estimer les valeurs d'au moins une parmi la densité et la viscosité du liquide dans lequel l'élément de détection (4, 4$^{III}$, 4$^{IV}$) est immergé, sur la base d'une cartographie prédéfinie.

**14.** - Procédé pour détecter au moins une parmi la densité et la viscosité d'un liquide, au moyen d'une paire de capteurs (2-2$^{IV}$) selon l'une quelconque des revendications 1 à 10, lesdits capteurs (2-2$^{IV}$) ayant des caractéristiques différentes et comprennent, respectivement, un premier élément de détection (4, 4$^{III}$, 4$^{IV}$) comprenant un premier élément actif (32, 32$^{III}$), et un second élément de détection (4, 4$^{III}$, 4$^{IV}$) comprenant un second élément actif (32, 32$^{III}$), et le procédé comprenant les étapes :

> a. mesurer la fréquence de résonance du premier élément de détection (4, 4$^{III}$, 4$^{IV}$) lorsque l'élément de détection (4, 4$^{III}$, 4$^{IV}$) est excité par une fréquence f1 correspondant à un premier mode de vibration de celui-ci ;
> b. mesurer la fréquence de résonance du second élément de détection (4, 4$^{III}$, 4$^{IV}$) lorsque l'élément de détection (4, 4$^{III}$, 4$^{IV}$) est excité par une fréquence f2 correspondant à un second mode de vibration de celui-ci ;
> c. estimer les valeurs d'une propriété du fluide dans lequel les éléments de détection (4, 4$^{III}$, 4$^{IV}$) sont immergés, telles que les valeurs de densité ou de viscosité dudit liquide, sur la base d'une cartographie prédéfinie.

**15.** - Procédé selon l'une quelconque des revendications 12 à 14, dans lequel au moins un capteur (2-2$^{IV}$, 4, 4$^{III}$, 4$^{IV}$) est associé à de multiples éléments de référence (28, 28$^{I}$, 28$^{II}$, 28$^{III}$), lesdits éléments de référence (28, 28$^{I}$, 28$^{II}$, 28$^{III}$) étant de préférence différents les uns des autres, de telle sorte qu'un premier capteur (2, 2$^{III}$) aura des caractéristiques différentes d'un second capteur (2, 2$^{III}$).

EP 2 810 043 B1

Fig. 1

Fig. 2

Fig. 4

Fig. 5

Fig. 6

Fig. 5b

Fig. 5a

Fig. 7

Fig. 8

Fig. 9

Fig. 10

Fig. 11

Fig. 12

Fig. 13

Fig. 14

EP 2 810 043 B1

Fig. 15

Fig. 16

22

Fig. 17

Fig. 18

Fig. 19

Fig. 20

EP 2 810 043 B1

Fig. 21

Fig. 22

Fig. 23

EP 2 810 043 B1

(a)

(b)

(c)

(d)

Fig. 24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009120169 A

- DE 102008054945

**Non-patent literature cited in the description**

- *Journal of Applied Physics,* vol. 89 (2